# EUROPEAN PATENT APPLICATION

(11) **EP 0 637 869 A1**
(43) Date of publication of application: **08.02.1995**
(21) Application number: 93306150.9
(22) Date of filing: 04.08.1993
(51) Int. Cl.: H02P 7/298

(54) **A compensation principle and driving device for compound voltage driving series motor**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

During compound voltage driving for series motor, a speed change affect can be obtained from the change in torsion in combination with the load. However, during low voltage driving or light loading, the speed reduction and excitation decrease, compared to output of same torsion will result in poor rate of speed adjustment and low efficiency. The present design relates to a compensation principle and circuit device for compound voltage driving series motor, and more specifically there is an independent power supply, when motor is at low voltage driving or light-loaded operation, the assisted exciting power supply will directly employ series winding as the load for exciting in order to promote the efficiency of electrical load during low voltage and low speed driving.

## Description

### SUMMARY OF THE INVENTION

During compound voltage driving for series motor, a speed change effect can be obtained from the change in torsion in combination with the load. However, during low voltage driving or light loading, the speed reduction and excitation decrease, compared to output of same torsion will result in poor rate of speed adjustment and low efficiency. The present design relates to a compensation principle and circuit device for compound voltage driving series motor, and more specifically there is an independent power supply, when motor is at low voltage driving or light-loaded operation, the assisted exciting power supply will directly employ series winding as the load for exciting in order to promote the efficiency of electrical load during low voltage and low speed driving.

### BRIEF DESCRIPTION OF THE DRAWINGS

FIG. 1 is a diagram showing the compensation principle and circuit device for compound voltage driving series motor having assisted field exciting winding.

FIG 2 is a diagram showing the embodiment of the compensation principle and circuit device for compound voltage driving series motor including an assisted field exciting winding and sensor elements and control unit.

### DETAILED DESCRIPTION OF THE INVENTION

The conventional series motor is highly popular among the circle of manufacturing industries due to its great starting torsion and small impact to the power supply. Nevertheless it is defective with low efficiency during series motor at low voltage driving or light-loading operation. No improvement has been made with reference to all prior arts. Recently owing to the development of solid-state electronic techniques, the speed control for series motor has been widely applied. However, the defect concerning the extra-low efficiency during low voltage driving is not improved at all. Especially during low voltage driving, as exciting current of series field is equivalent to armature current, when armature current is too small the field will get weak relatively to reduce the torsion so that the rate of speed adjustment is extremely poor. The present compensation principle and circuit device for compound voltage motor relates to the assisted exciting power supply passing by the series field winding in order to intensify the exciting current of series winding and promote its operational efficiency.

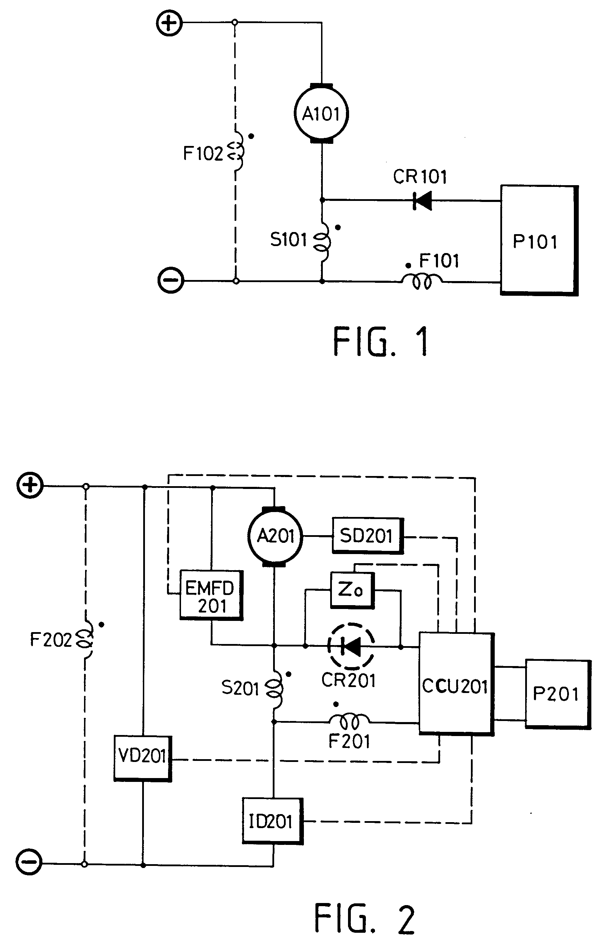

The principle of the present design is described as below:
Referring to FIG. 1, it is a diagram showing the compensation principle and circuit device for compound voltage driving series motor having assisted field exciting winding, comprising:
a series field winding S101 series with armature A101 and parallel connected to the power supply may further have shunt winding F102 to appear compound type;
an assisted exciting power supply P101 comprising storage type electrical element or generator set or other electrical device is engaged in assisted exciting against series field by virtue of diode CR101 in order to advance torque and improve the rate of motor speed adjustment; except series diode CR101 between the assisted exciting power supply P101 and series field, it may further be series with assisted field winding F101 of same exciting polarity in order to reduce drop loss of armature current passing by series field and maintain a much stable field under same exciting intensity condition so as to prevent excessive rise of running speed during idle load condition.

Referring to FIG. 2, the exciting means of assisted exciting power supply against series motor field winding according to the present compensation principle and circuit device for compound voltage driving series motor include:
(1) continuous exciting;
(2) the control of relatively exciting current value with reference to input voltage;
(3) the control of relatively exciting current value with reference to the loading current value;
(4) the control of relatively exciting current value with reference to both input voltage and loading current value.

Referring to FIG. 2, it is a block diagram showing the compensation principle and circuit device for compound voltage driving series motor further including an assisted field exciting winding and sensor elements and control unit wherein assisted exciting current value is determined subject to motor speed or armature anti electric potential or current change of assisted exciting power supply against series motor field winding or input current or input voltage value, comprising:
a series field winding S201 series with armature A201 to form a DC series motor;
an assisted field winding F201 is co-polared winding with series field winding S201, and its winding is series with the series field winding and then jointly leading to the assisted exciting power supply P201 for driving and what is particular is that motor armature current is not to pass by the assisted field winding;
the assisted exciting power supply P201 comprising storage type electrical element or generator set or other electrical device, series exciting field winding and auxiliary field winding may be series with a choke diode CR201 subject to the requirement;
the output end of the assisted exciting power supply P201 may further be series with a CCU201 for series with a voltage detector VD201 at the electric input end of motor and loading current sensing device ID201 or motor speed sensing device or armature anti electric potential sensing device EMFD201 at the motor series circuit, for change in exciting of assisted exciting power supply P201 against series field wilding, because the voltage drop value of series field wilding is changed according to loading current, so when increase in loading current leads to increase in voltage drop, the assisted exciting current will be decreased, and when this voltage drop value is greater than voltage of assisted exiting power supply, if assisted exciting power supply is comprised of storage type element such as battery, it may further be serialized with current-limit adjustment element Zo between two ends of the choke diode CR201, so as to adjust the current charged to storage type element, depends upon the signal input to central control unit, it may further control motor.

The embodiments above are provided to verify the reasonableness and utility of the fundamental principle shown on FIG. 1. Please examine it in accordance with the laws.

## Claims

1. A compensation principle and circuit device for compound voltage driving series motor relates to an independent power supply, when motor is at low voltage driving or light-loaded operation, the assisted exciting power supply will directly employ series winding as the load for exciting in order to promote the efficiency of electrical load during low voltage and low speed driving, comprising:
a series field winding S101 series with armature A101 and parallel connected to the power supply may further have shunt winding F102 to appear compound type;
an assisted exciting power supply P101 comprising storage type electrical element or generator set or other electrical device is engaged in assisted exciting against series field by virtue of diode CR101 in order to advance torque and improve the rate of motor speed adjustment; except series diode CR101 between the assisted exciting power supply P101 and series field, it may further be series with assisted field winding F101 of same exciting polarity in order to reduce drop loss of armature current passing by series field and maintain a much stable field under same exciting intensity condition so as to prevent excessive rise of running speed during idle load condition;
As mentioned above , the exciting means of assisted exciting power supply against series motor field winding according to the present compensation principle and circuit device for compound voltage driving series motor include:
(1) continuous exciting;
(2) the control of relatively exciting current value with reference to input voltage;
(3) the control of relatively exciting current value with reference to the loading current value;
(4) the control of relatively exciting current value with reference to both input voltage and loading current value.

2. The compensation principle and circuit device for compound voltage driving series motor according to claim 1 further including an assisted field exciting winding and sensor elements and control unit wherein assisted exciting current value is determined subject to motor speed or armature anti electric potential or current change of assisted exciting power supply against series motor field winding or input current or input voltage value, comprising:
a series field winding S201 series with armature A201 to form a DC series motor;
an assisted field winding F201 is co-polared winding with series field winding S201, and its winding is series with the series field winding and then jointly leading to the assisted exciting power supply P201 for driving and what is particular is that motor armature current is not to pass by the assisted field winding;
the assisted exciting power supply P 201 comprising storage type electrical element or generator set or other electrical device, series exciting field winding and auxiliary field winding may be series with a choke diode CR201 subject to the requirement;
the output end of the assisted exciting power supply P201 may further be series with a CCU201 for series with a voltage detector VD201 at the electric input end of motor and loading current sensing device ID201 or motor speed sensing device or armature anti electric potential sensing device EMFD201 at the motor series circuit, for change in exciting of assisted exciting power supply P201 against series field wilding, because the voltage drop value of series field wilding is changed according to loading current, so when increase in loading current leads to increase in voltage drop, the assisted exciting current will be decreased, and when this voltage drop value is greater than voltage of assisted exiting power supply, if assisted exciting power supply is comprised of storage type element such as battery, it may further be serialized with current-limit adjustment element Zo between two ends of the choke diode CR201, so as to adjust the current charged to storage type element, depends upon the signal input to central control unit, it may further control motor.
